# EUROPÄISCHE PATENTSCHRIFT

(11) **EP 2 162 979 B1**
(45) Veröffentlichungstag und Bekanntmachung des Hinweises auf die Patenterteilung: **06.01.2021**
(21) Anmeldenummer: 08773840.7
(22) Anmeldetag: 03.07.2008
(51) Int. Cl.: H01H 9/06, H02K 11/28, H02P 7/281

(54) **ANSTEUEREINRICHTUNG FÜR EINEN ELEKTROMOTOR**
DRIVING DEVICE FOR AN ELECTRIC MOTOR
DISPOSITIF DE COMMANDE POUR MOTEUR ÉLECTRIQUE

(30) Priorität: 04.07.2007 DE 102007031015
(43) Veröffentlichungstag der Anmeldung: 17.03.2010
(73) Patentinhaber: Marquardt GmbH, 78604 Rietheim-Weilheim (DE)
(72) Erfinder: PFEIFFER, Dirk, 78244 Gottmadingen (DE); ERB, Tino, 78224 Singen-Bohlingen (DE); SEIDEL, Andreas, 78244 Gottmadingen (DE); HÜGLI, Roger, 9552 Bronschhofen (CH); VOGLER, Daniel, 8245 Feuerthalen (CH)
(74) Vertreter: Jostarndt Patentanwalts-AG
(86) Internationale Anmeldenummer: PCT/EP2008/005430
(87) Internationale Veröffentlichungsnummer: WO 2009/003703

(56) Entgegenhaltungen:
- EP-A- 0 489 343
- EP-A- 1 800 802
- WO-A-2007/012311
- DE-A1-102004 008 394
- JP-A- 7 264 876
- US-A- 5 428 522
- US-A- 5 892 885

## Beschreibung

Die Erfindung betrifft eine Einrichtung zur Ansteuerung eines Elektromotors nach dem Oberbegriff des Patentanspruchs 1.

Eine derartige Einrichtung wird vor allem in einem Elektrowerkzeug mit einem Elektromotor eingesetzt. Insbesondere kann es sich dabei um ein Akku-Elektrowerkzeug mit einem Gleichstrom-Motor handeln. In vorteilhafter Weise läßt sich die Einrichtung auch zur Ansteuerung von bürstenlosen Gleichstrommotoren, sogenannten EC(electronic commutated)-Motoren, verwenden,

Eine aus der EP 1 800 802 A1 bekannte Einrichtung zur Ansteuerung eines Elektromotors für ein Elektrowerkzeug besitzt eine mit Leistungshalbleitern arbeitende Leistungsschaltung zum steuerbaren Anlegen einer elektrischen Spannung an den Elektromotor. Die Ansteuereinrichtung umfaßt weiterhin eine Steuerschaltung zur Steuerung der Leistungshalbleiter, derart daß der Elektromotor mit einer einstellbaren Drehzahl, einem einstellbaren Drehmoment o. dgl. betreibbar ist, Ist die Ansteuereinrichtung für ein Elektrowerkzeug bestimmt, so ist weiter im Gehäuse des Elektrowerkzeugs ein Schaltmodul mit einem Betätigungsorgan, das manuell vom Benutzer verstellbar ist, zum Ein- und/oder Ausschalten des Betriebs für den Elektromotor angeordnet.

Soll der Elektromotor sowohl im Rechts- als auch im Linkslauf betreibbar sein, so ist es weiter aus der EP 1 800 802 A1 bekannt, hierzu vier Leistungshalbleiter in der Art einer H-Brücke in der Leistungsschaltung anzuordnen. Ebenso ist in der US 5 428 522 A eine H-Brücke mit vier Leistungshalbleitern gezeigt, wobei die Leistungshalbleiter aus einem MosFet bestehen können. Eine weitere H-Brücke mit vier aus einem MosFet bestehenden Leistungshalbleitern ist in der JP 07 264 876 A gezeigt, wobei die MosFet jeweils eine interne Diode besitzen. Eine derartige Anordnung ist aufwendig und im Hinblick auf die Leistungshalbleiter auch teuer. Außerdem benötigen die Leistungshalbleiter einen großen Einbauraum.

Weiterhin ist in der DE 10 2004 008 394 A1 eine Leistungsschaltung mit einer H-Brücke für einen Elektromotor beschrieben, bei der lediglich zwei Leistungshalbleiter benötigt werden. Diese Leistungsschaltung weist je einen Zweig mit lediglich einem einzigen Leistungshalbleiter für den Rechts- sowie den Linkslauf des Elektromotors auf. Zur Einstellung des jeweiligen Zweiges ist in der Leistungsschaltung ein elektromagnetisches Umschaltrelais angeordnet.

In der EP 0 489 343 A2 ist desweiteren ein Schalter für ein Elektrowerkzeug beschrieben, der ein manuell bedienbares Betätigungsorgan aufweist. Das Betätigungsorgan verstellt wiederum ein Potentiometer, wobei ein Leistungshalbleiter im Schalter den Stromfluß zum Elektromotor korrespondierend zur Potentiometerstellung steuert.

Schließlich ist in der WO 2007/012311 A1 eine Schaltung zur Ansteuerung eines Elektromotors gezeigt, bei der mittels eines Mikroprozessors das Ein-/Ausschalten des Elektrowerkzeugs sowie das Umschalten zwischen Rechts- und Linkslauf für das Elektrowerkzeug elektronisch erfolgt. Hierfür sind an den Eingängen des Mikroprozessors mittels eines Betätigungsorgans schaltbare Hilfskontakte zur Erzeugung der entsprechenden Signale zum Ein-/Ausschalten sowie Umschalten zwischen Rechts- und Linkslauf angeordnet.

Der Erfindung liegt die Aufgabe zugrunde, die Einrichtung zur Ansteuerung eines Elektromotors einfacher und/oder kostengünstiger auszugestalten.

Diese Aufgabe wird bei einer gattungsgemäßen Einrichtung zur Ansteuerung eines Elektromotors durch die kennzeichnenden Merkmale des Anspruchs 1 gelöst.

Bei der erfindungsgemäßen Ansteuereinrichtung weist die Leistungsschaltung je einen Zweig mit lediglich einem einzigen Leistungshalbleiter für den Rechts- sowie den Linkslauf des Elektromotors auf. Zusätzlich ist für die Leistungsschaltung und/oder in der Leistungsschaltung ein mechanischer, elektrischer Schalter zur Einstellung des jeweiligen Zweiges angeordnet. Der Schalter wird mittels eines manuell bedienbaren Schiebers betätigt. Die Schaltung des elektrischen Schalters für die Einstellung des Zweiges ist von der Steuerschaltung über entsprechende Erfassungsmittel ermittelbar, sodass der der jeweiligen Schaltstellung zugeordnet Leitungshalbleiter von der Steuerschaltung ansteuerbar ist.

Vorteilhafterweise benötigt die Ansteuereinrichtung insgesamt nur zwei Leistungshalbleiter, so daß der im Elektrowerkzeug benötigte Bauraum entsprechend reduziert und die Kostengünstigkeit gesteigert ist. Der elektrische Schalter kann dabei insbesondere in der Art eines Wechselkontakts ausgebildet sein, was zu einer weiteren Vereinfachung der Ansteuereinrichtung beiträgt. Weitere Ausgestaltungen der Erfindung sind Gegenstand der Unteransprüche.

In einer zweckmäßigen Ausgestaltung weist das Schaltmodul ein manuell bedienbares Betätigungsorgan auf, wobei das Betätigungsorgan aus einer Ausgangsstellung bis zu einer Maximalstellung bewegbar ist. Um eine Drehzahleinstellung, eine Drehmomenteinstellung o. dgl. für den Elektromotor durch den Benutzer zu gestatten, bietet es sich an, daß die Steuerschaltung den jeweiligen Leistungshalbleiter in der Art einer Pulsweitenmodulation, einer Phasenanschnittsteuerung, einer Phasenabschnittsteuerung o. dgl. ansteuert. Zu diesem Zweck ist dem jeweiligen Bewegungsweg des Betätigungsorgans ausgehend von der Ausgangsstellung bis zur Maximalstellung jeweils eine Drehzahl, ein Drehmoment o. dgl. zugeordnet. Der Elektromotor wird dann mit der Drehzahl, dem Drehmoment o. dgl. entsprechend dem eingestellten Bewegungsweg von der Steuerschaltung betrieben. Bei maximalem Bewegungsweg des Betätigungsorgans, also bei dessen Maximalstellung ist die größtmögliche Drehzahl, das größtmögliche Drehmoment o. dgl. vom Benutzer angewählt, so daß die Steuerschaltung den im jeweiligen Zweig befindlichen Leistungshalbleiter voll durchschaltet. Es bietet sich für eine einfache Ausgestaltung dabei weiter an, daß die Bewegung des Betätigungsorgans ein Potentiometer korrespondierend zum jeweiligen Bewegungsweg des Betätigungsorgans verstellt, womit das vom Potentiometer erzeugte, zur jeweiligen Stellung des Betätigungsorgans korrespondierende Signal der Steuerschaltung zur dementsprechenden Ansteuerung des Leistungshalbleiters dient.

In einfacher Art und Weise besteht die Steuerschaltung aus einer Elektronik. Als Elektronik ist ein Mikroprozessor, ein Mikrocontroller, ein ASIC, also eine anwenderspezifische integrierte Schaltung, o. dgl. geeignet. Selbstverständlich kann auch eine diskrete Schaltung, gegebenenfalls auch eine analoge Schaltung als Elektronik Verwendung finden. Weiterhin können Mittel vorgesehen sein, um die Schaltstellung des elektrischen Schalters für die Einstellung des Zweiges von der Steuerschaltung zu ermitteln. Dadurch ist dann der der jeweiligen Schaltstellung und somit dem jeweiligen Zweig zugeordnete Leistungshalbleiter von der Steuerschaltung ansteuerbar.

In einfacher Weise kann der Elektromotor beim Ausschalten auch abgebremst werden. Zu diesem Zweck steuert die Steuerschaltung bei Rückkehr des Betätigungsorgans in die Ausgangsstellung den jeweiligen Leistungshalbleiter derart an, daß der Elektromotor zur Erzielung einer generatorischen Bremswirkung in der Art einer elektronischen Auslaufbremse kurzgeschlossen ist. Hierzu wird in der einfachsten Ausführung der Leistungshalbleiter während des Bremsvorgangs von der Steuerschaltung statisch eingeschaltet, also durchgesteuert. In einer etwas komfortableren Ausführung wird der Leistungshalbleiter von der Steuerschaltung mittels einer Pulsweitenmodulation angesteuert, so daß die Bremswirkung in der Art einer Softbremse einstellbar ist und damit den Bedürfnissen anpaßbar ist.

Für Gleichstrommotoren und somit auch für Akku-Elektrowerkzeuge ist als Leistungshalbleiter ein MosFet in besonderer Weise geeignet. Um die Aufrechterhaltung des Stromflusses durch den Elektromotor während der Pulspause bei Ansteuerung mittels einer Pulsweitenmodulation zu gewährleisten, ist dem jeweiligen Zweig der Leistungsschaltung eine Freilaufdiode zugeordnet. In einfacher Weise kann dies eine externe Freilaufdiode für die Beschaltung des Elektromotors sein. Es sind jedoch auch MosFets mit internen Dioden verfügbar. Weist der Leistungshalbleiter eine interne Diode auf, so läßt sich die interne Diode als dem jeweiligen Zweig zugeordnete Freilaufdiode für die Beschaltung des Elektromotors verwenden. Es sind dann keine separaten Freilaufdioden für die Beschaltung des Elektromotors erforderlich, womit die Leistungsschaltung vereinfacht ist und Kosten eingespart werden können.

In einfacher sowie kostengünstiger Weise kann das Schaltmodul und/oder die Steuerschaltung einen Hilfskontakt aufweisen, wodurch die Steuerschaltung durch den Hilfskontakt eingeschaltet wird. Das Einschalten kann zweckmäßigerweise bei Bewegung des Betätigungsorgans aus der Ausgangsstellung erfolgen. Falls gewünscht, kann zwischen der Leistungsschaltung und der Spannungsversorgung noch ein elektrischer Schalter angeordnet sein, mit dessen Hilfe die Spannung bei nichtbetätigten, in der Ausgangsstellung befindlichen Betätigungsorgan vollständig abschaltbar ist.

Insbesondere bei einem Elektrowerkzeug kann es sich im Hinblick auf die Kompaktheit anbieten, das Schaltmodul sowie das Betätigungsorgan und/oder die Steuerschaltung in einer Schalteranordnung anzuordnen. Gegebenenfalls kann in der Schalteranordnung auch noch die Leistungsschaltung aufgenommen sein. Eine solche Schalteranordnung ist als komplette, selbständige Einheit herstellbar, welche dann lediglich bei Montage des Elektrowerkzeugs in das Gehäuse des Elektrowerkzeugs in einfacher Art und Weise einzusetzen ist.

Zusammenfassend läßt sich für einen Elektrowerkzeugschalter mit elektronisch/mechanischer H-Brücke entsprechend einer ersten bevorzugten Ausführung feststellen, daß dieser zwei mechanische Leistungskontakte und eine Elektronik mit zwei Leistungshalbleitern aufweist, die eine H-Brücke darstellen. Durch mechanische Vorauswahl über den Rechts-Links-Umschalter wird bestimmt, welcher der beiden Leistungshalbleiter geschaltet wird und damit die Drehrichtung des Elektrowerkzeuges vorgewählt. Zusätzlich erkennt eine Elektronik mit Controller welcher der beiden Leistungskontakte betätigt wurde und steuert den dazugehörigen Leistungshalbleiter pulsweitenmoduliert und/oder voll durch. Wird das Betätigungselement des Elektrowerkzeugschalters losgelassen, erkennt der Controller diesen Zustand und steuert den entsprechenden Leistungshalbleiter durch, um die Wirkung einer generatorischen Bremse in der Art einer elektronischen Auslaufbremse zu erzielen.

Zusammenfassend läßt sich für einen Elektrowerkzeugschalter mit elektronisch/mechanischer H- Brücke ohne zusätzliche Freilaufdioden entsprechend einer zweiten bevorzugten Ausführung feststellen, daß dieser einen mechanischen Wechselkontakt mit Mittelstellung und eine Elektronik mit zwei, interne Dioden besitzende Leistungshalbleiter aufweist, die eine H-Brücke darstellen. Durch die Stellung des Rechts-/Links-Umschalters wird bestimmt, welcher der beiden Leistungshalbleiter eingeschaltet werden muß, damit die Drehrichtung des Elektrowerkzeuges vorgewählt wird. Zusätzlich erkennt eine Elektronik wie der Wechselschalter steht und steuert den dazugehörigen Leistungshalbleiter pulsweitenmoduliert und/oder voll durch. Die Elektronik wird durch einen Hilfskontakt eingeschaltet. Wird das Betätigungselement des
Elektrowerkzeugschalters losgelassen, erkennt die Elektronik diesen Zustand und steuert den entsprechenden Leistungshalbleiter durch, um die Wirkung einer generatorischen Bremse in der Art einer elektronischen Auslaufbremse zu erzielen. Der eigentliche Bremsvorgang kann dann durch statisches Einschalten des entsprechenden Mosfets erfolgen oder durch eine pulsweitenmodulierte Softbrake, um ein sanftes Abbremsen zu erreichen.

Die mit der Erfindung erzielten Vorteile bestehen insbesondere darin, daß gegenüber einer herkömmlichen H-Brücke, die vier Leistungshalbleiter aufweist, nur zwei Leistungshalbleiter benötigt werden. Dennoch wird mit diesen zwei Leistungshalbleitern die Wirkung einer H-Brücke erzielt. Daraus resultiert im Normalbetrieb eine geringere Erwärmung gegenüber den bisherigen vier Leistungshalbleitern. Somit lassen sich neue, höhere Leistungsbereiche als bisher erschließen. Außerdem entfällt ein mechanischer Bremskontakt, was die Kosten weiter reduziert. Man erhält ein einfaches Rechts-/LinksLauf-System, wobei kein mechanischer Verschleiß am Rechts-Links-Umschalter auftritt.

Schließlich sind zumindest bei der zweiten Ausführung keine separaten Freilaufdioden notwendig, denn die internen Dioden der beiden Mosfets funktionieren als Freilaufdioden mit entsprechend hoher Leistung. Das spart weitere Kosten ein und vereinfacht die Schaltung zur Ansteuerung des Elektromotors erheblich. Die beiden Mosfets können beide als N-Kanal Mosfets ausgelegt sein. Alternativ kann auch der eine, in der Schaltung oben angeordnete Mosfet als P-Kanal Mosfet ausgelegt sein, was den Vorteil hat, daß die beiden Mosfets auf einem Kühlkörper nicht voneinander isoliert sein müssen. Ebenso kann ein ON-Kontakt mit integriert werden, um somit eine galvanische Trennung von der Spannungsversorgung, die beispielsweise aus einem Akku besteht, zu erreichen.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: schematisch das Schaltbild einer Einrichtung zur Ansteuerung eines Elektromotors entsprechend einer Ausführung,
- Fig. 2: das Schaltbild einer Einrichtung zur Ansteuerung eines Elektromotors entsprechend einer weiteren Ausführung und
- Fig. 3: einen Schnitt durch ein Akku-Elektrowerkzeug mit einer Ansteuereinrichtung für den Elektromotor.

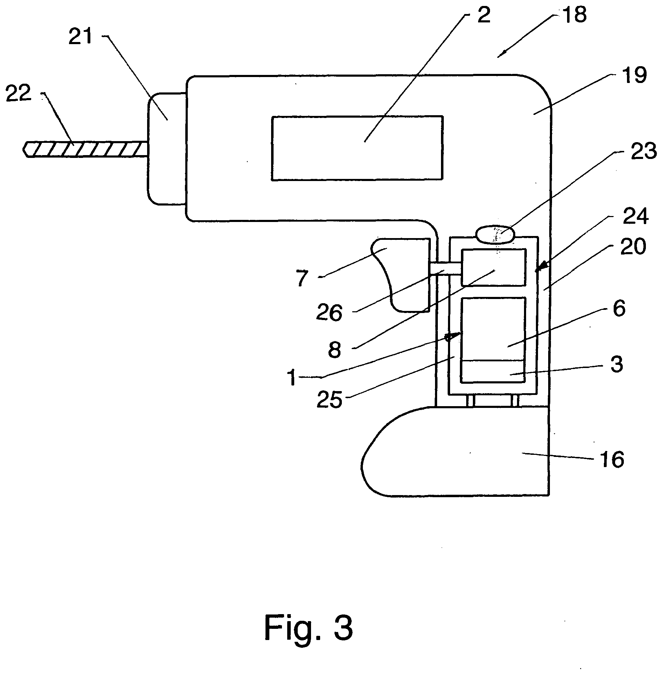

In Fig. 3 ist ein Elektrowerkzeug 18, bei dem es sich vorliegend um eine Akku-Bohrmaschine handelt, schematisch gezeigt. Das Elektrowerkzeug 18 besitzt ein Elektrowerkzeug-Gehäuse 19 mit einem Handgriff 20. Im Elektrowerkzeug-Gehäuse 19 befindet sich ein Elektromotor 2, der zum Antrieb eines in einer Werkzeugaufnahme 21 befindlichen Werkzeugs 22, wie eines Bohrers, dient. Der Elektromotor 2 wird mittels eines in den Handgriff 20 einsteckbaren, aufladbaren, aus einem Akku bestehenden Energiespeichers 16 mit elektrischer Energie versorgt.

Im Handgriff 20 befindet sich ein Elektrowerkzeugschalter 24 mit einem Schaltergehäuse 25, derart daß der Elektrowerkzeugschalter 24 eine separat vom Elektrowerkzeug 18 montierbare Einheit darstellt. Der Elektrowerkzeugschalter 24 besitzt ein aus dem Handgriff 20 herausragendes Betätigungsorgan 7, das vom Benutzer durch manuelle Bewegung zwischen einer Ausgangsstellung und einer Maximalstellung verstellbar ist. Im Schaltergehäuse 25 befindet sich eine in Fig. 3 schematisch angedeutete Ansteuereinrichtung 1 zum Betrieb, und zwar zur Steuerung und/oder Regelung des Elektromotors 2, wie dessen Drehzahl, Drehmoment o, dgl., in Abhängigkeit vom Verstellweg des Betätigungsorgans 7, das über einen Stößel 26 auf ein Schaltmodul 8 im Elektrowerkzeugschalter 24 einwirkt. Mittels eines am Elektrowerkzeugschalter 24 angeordneten, ebenfalls aus dem Elektrowerkzeug-Gehäuse 19 zur manuellen Bedienung durch den Benutzer herausragenden Schiebers 23 ist der Recht-/Links-Lauf für den Elektromotor 2 anwählbar,

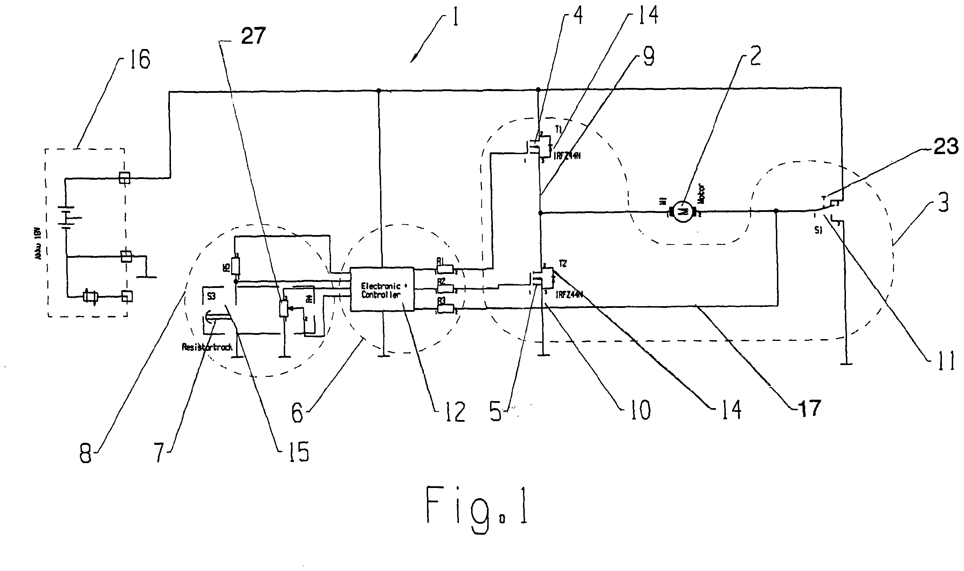

In Fig. 1 ist die Einrichtung 1 zur Ansteuerung des Elektromotors 2 näher als Schaltbild gezeigt. Die Ansteuereinrichtung 1 dient insbesondere zum Betrieb eines Gleichstrommotors in einem Akku-Elektrowerkzeug, der von einem als Akku ausgebildeten Energiespeicher 16 mit elektrischer Spannung versorgt wird, wie bereits anhand von Fig. 3 ausgeführt ist, Die Ansteuereinrichtung 1 umfaßt eine Leistungsschaltung 3 mit wenigstens einem Leistungshalbleiter 4, 5 zum steuerbaren Anlegen einer elektrischen Spannung an den Elektromotor 2 sowie eine Steuerschaltung 6 zur Steuerung des Leistungshalbleiters 4, 5. Die Steuerschaltung 6 steuert den Leistungshalbleiter 4, 5 derart an, daß der Elektromotor 2 mit einer einstellbaren Drehzahl, einem einstellbaren Drehmoment o. dgl. betreibbar ist. Das Schaltmodul 8 weist das vom Benutzer aus einer Ausgangsstellung verstellbare Betätigungsorgan 7 zum Ein- und/oder Ausschalten des Betriebs für den Elektromotor 2 auf. Die Leistungsschaltung 3 weist einen Zweig 9, in dem der Leistungshalbleiter 4 befindlich ist, als Strompfad für den Rechtslauf sowie einen weiteren Zweig 10, in dem der Leistungshalbleiter 5 befindlich ist, als Strompfad für den Linkslauf des Elektromotors 2 auf. In der Leistungsschaltung 3 ist ein elektrischer, mechanisch betätigbarer Schalter 11 zur Einstellung des jeweiligen Zweiges 9, 10 angeordnet. Der Schalter 11 kann in der Art eines Wechselkontakts ausgestaltet sein und wird vom Benutzer mittels des Schiebers 23 betätigt. Die Schaltstellung des elektrischen Schalters 11 für die Einstellung des Zweiges 9, 10 ist von der Steuerschaltung 6 über entsprechende Erfassungsmittel 17 ermittelbar, so daß der der jeweiligen Schaltstellung zugeordnete Leistungshalbleiter 4, 5 von der Steuerschaltung 6 ansteuerbar ist.

Die Steuerschaltung 6 umfaßt eine Elektronik 12, die beispielsweise aus einem Mikroprozessor, einem Mikrocontroller, einem ASIC o. dgl. besteht. Die Elektronik 12 steuert den jeweiligen Leistungshalbleiter 4, 5 entsprechend dem ausgewählten Zweig 9, 10 in der Art einer Pulsweitenmodulation an, wenn der Elektromotor 2 mit Gleichstrom betrieben wird. In diesem Fall handelt es sich bei dem Leistungshalbleiter 4, 5 bevorzugterweise um einen MosFet. Bei einem mit Wechselstrom betriebenen Elektromotor 2 steuert die Elektronik 12 den Leistungshalbleiter 4, 5 mit einer Phasenanschnittsteuerung, einer Phasenabschnittsteuerung o. dgl. an. Im Schaltmodul 8 befindet sich ein Potentiometer 27, das korrespondierend zum jeweiligen Bewegungsweg des Betätigungsorgans 7 verstellt wird. Das vom Potentiometer 27 erzeugte elektrische Signal dient als Sollwert für die Elektronik 12, wodurch der Elektromotor 2 mit einer dem Bewegungsweg des manuell vom Benutzer bedienbaren Betätigungsorgans 7 zugeordneten Drehzahl betreibbar ist. Falls gewünscht kann der Elektromotor 2 auch mit einem dem Bewegungsweg des Betätigungsorgans 7 zugeordneten Drehmoment o. dgl. betreibbar sein. Bei Erreichen der End- oder Maximalstellung des Betätigungsorgans 7, d.h. bei maximalem Bewegungsweg des Betätigungsorgans 7, schaltet die Steuerschaltung 6 den jeweiligen Leistungshalbleiter 4, 5 voll durch.

Weiterhin steuert die Steuerschaltung 6 bei Rückkehr des Betätigungsorgans 7 in die Ausgangsstellung, also zum Ausschalten des Elektrowerkzeugs 18, den jeweiligen Leistungshalbleiter 4, 5 derart an, daß der Elektromotor 2 zur Erzielung einer generatorischen Bremswirkung in der Art einer elektronischen Auslaufbremse kurzgeschlossen ist. Im einfachsten Fall ist der Leistungshalbleiter 4, 5 während des Bremsvorgangs statisch eingeschaltet, also durchgesteuert. Falls ein geregeltes Abbremsen in der Art einer Soft- oder Sanftbremse erwünscht ist, kann der entsprechende Leistungshalbleiter 4, 5 wiederum während des Bremsvorgangs mittels einer Pulsweitenmodulation angesteuert werden.

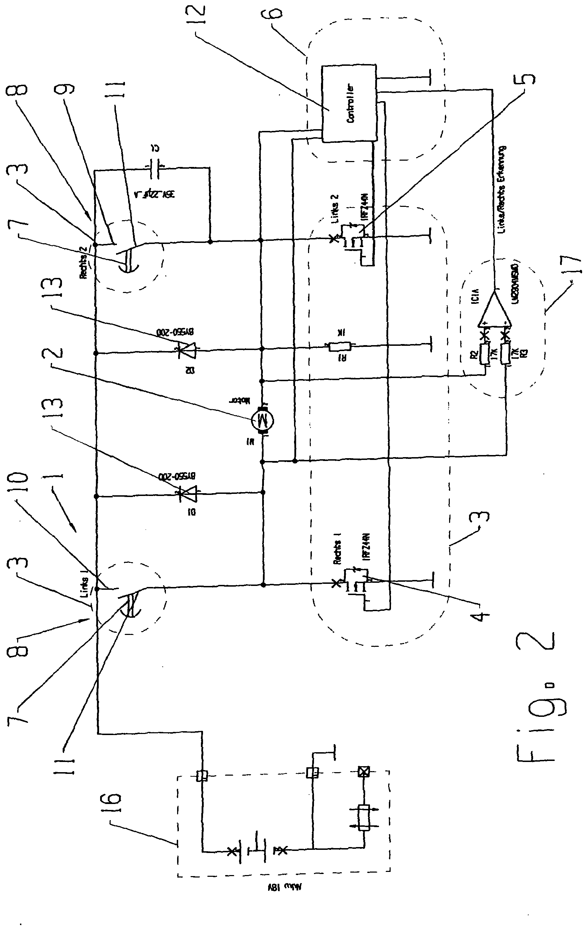

In einer weiteren Ausführung gemäß Fig. 2 ist dem jeweiligen Zweig 9, 10 eine externe Freilaufdiode 13 für die Beschaltung des Elektromotors 2 zugeordnet. Die Freilaufdioden 13 sorgen für die Aufrechterhaltung des Stromflusses durch den Elektromotor 2, insbesondere während der Pulspause bei der Ansteuerung mittels Pulsweitenmodulation. Bei der Ausführung nach Fig. 1 hingegen weist der Leistungshalbleiter 4, 5 eine interne Diode 14 auf, wobei die interne Diode 14 gleichzeitig als die dem jeweiligen Zweig 9, 10 zugeordnete Freilaufdiode für die Beschaltung des Elektromotors 2 dient. Vorteilhafterweise sind bei der Schaltung nach Fig. 1 somit keine separaten Freilaufdioden für die Beschaltung des Elektromotors 2 erforderlich. Bei dem Leistungshalbleiter 4, 5 handelt es sich bevorzugterweise um einen mit einer internen Diode 14 versehenen MosFet.

Wie man weiter der Fig. 1 entnimmt, weist das Schaltmodul 8 einen Hilfskontakt 15 auf. Durch den Hilfskontakt 15 wird die Steuerschaltung 6 bei Bewegung des Betätigungsorgans 7 aus der Ausgangsstellung eingeschaltet. Umgekehrt wird mittels des Hilfskontakts 15 die Steuerschaltung 6 bei Rückkehr des Betätigungsorgans 7 in die Ausgangsstellung ausgeschaltet. Der Hilfskontakt 15 kann auch in der Steuerschaltung 6 selbst angeordnet sein, was jedoch nicht weiter gezeigt ist. Schließlich wirkt bei der Ausführungsform gemäß Fig. 2 das Betätigungsorgan 7 direkt auf den elektrischen Schalter 11 zur Einstellung des jeweiligen Zweiges 9, 10 für den Rechts-/Links-Lauf des Elektromotors 2 ein, so daß der Schalter 11 für die Leistungsschaltung 3 im Schaltmodul 8 befindlich ist.

Für die Verwendung in einem Elektrowerkzeug bietet es sich an, das Schaltmodul 8 und/oder die Steuerschaltung 6 mitsamt dem Betätigungsorgan 7 in einer Schalteranordnung 24 anzuordnen, wie bereits weiter oben anhand des Elektrowerkzeugschalters 24 gemäß Fig. 3 beschrieben ist. Falls gewünscht kann dabei auch noch die Leistungsschaltung 3 in der Schalteranordnung 24 angeordnet sein. Weiterhin bietet es sich an, die Schalteranordnung 24 mit einem Schaltergehäuse 25 zur Aufnahme der darin angeordneten Komponenten zu versehen.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. Die Schalteranordnung 24 kann als Hochleistungsschalter in Gleichstrom(DC)-Elektrowerkzeugen und ähnlichen Geräten sowie - wenn die Kosten es erlauben - auch für Geräte im mittleren Leistungssegment eingesetzt werden. Die Ansteuereinrichtung 1 kann als allgemeine Leistungselektronik in Elektrowerkzeugen auch auf einem Träger, einer Leiterplatte o. dgl. eingesetzt werden, ohne daß es der Anordnung in einem Schaltergehäuse bedarf. Weiter kann die Erfindung auch in sonstigen Elektrogeräten, wie Elektrohaushaltsgeräten, Elektrogartengeräten, Werkzeugmaschinen, Steuergeräten o. dgl. vorteilhaft sowie in vielfältiger Weise Verwendung finden.

### Bezugszeichen-Liste:

- 1:: Einrichtung (zur Ansteuerung eines Elektromotors) / Ansteuereinrichtung
- 2:: Elektromotor
- 3:: Leistungsschaltung
- 4,5:: Leistungshalbleiter
- 6:: Steuerschaltung
- 7:: Betätigungsorgan
- 8:: Schaltmodul
- 9:: Zweig (für Rechtslauf)
- 10:: Zweig (für Linkslauf)
- 11:: Schalter
- 12:: Elektronik
- 13:: (externe) Freilaufdiode
- 14:: (interne) Diode
- 15:: Hilfskontakt (von Schaltmodul)
- 16:: Energiespeicher
- 17:: Erfassungsmittel (für Zweig)
- 18:: Elektrowerkzeug / Akku-Elektrowerkzeug
- 19:: Elektrowerkzeug-Gehäuse
- 20:: Handgriff
- 21:: Werkzeugaufnahme
- 22:: Werkzeug
- 23:: Schieber
- 24:: Elektrowerkzeugschalter / Schalteranordnung
- 25:: Schaltergehäuse
- 26:: Stößel
- 27:: Potentiometer

## Patentansprüche

1. Einrichtung zur Ansteuerung eines Elektromotors (2), insbesondere eines Gleichstrommotors in einem Akku-Elektrowerkzeug (18), mit einer wenigstens einen Leistungshalbleiter (4, 5) aufweisenden Leistungsschaltung (3) zum steuerbaren Anlegen einer elektrischen Spannung an den Elektromotor (2), sowie einer Steuerschaltung (6) zur Steuerung des Leistungshalbleiters (4, 5), derart, daß der Elektromotor (2) mit einer einstellbaren Drehzahl oder einem einstellbaren Drehmoment betreibbar ist, und mit einem Schaltmodul (8) zum Ein- und/oder Ausschalten des Betriebs für den Elektromotor (2), **dadurch gekennzeichnet, daß** die Leistungsschaltung (3) je einen Zweig (9, 10) als Strompfad mit einem Leistungshalbleiter (4, 5) für den Rechts- sowie den Linkslauf des Elektromotors (2) aufweist, und daß für die Leistungsschaltung (3) und/oder in der Leistungsschaltung (3) ein durch den Benutzer mittels eines manuell bedienbaren Schiebers (23) betätigbarer, mechanischer, elektrischer Schalter (11) zur Einstellung des jeweiligen Zweiges (9, 10) angeordnet ist, wobei Erfassungsmittel (17) zur Ermittelung der Schaltstellung des elektrischen Schalters (11) durch die Steuerschaltung (6) vorgesehen sind, so daß der der jeweiligen Schaltstellung zugeordnete Leistungshalbleiter (4, 5) von der Steuerschaltung (6) ansteuerbar ist.

2. Einrichtung nach Anspruch 1, **dadurch gekennzeichnet, daß** der elektrische Schalter (11) als ein Wechselkontakt ausgestaltet ist.

3. Einrichtung nach Anspruch 1 oder 2, **dadurch gekennzeichnet, daß** das Schaltmodul (8) ein manuell bedienbares Betätigungsorgan (7) aufweist, daß das Betätigungsorgan (7) aus einer Ausgangsstellung bis zu einer Maximalstellung bewegbar ist, und daß die Bewegung des Betätigungsorgans (7) ein Potentiometer (27) korrespondierend zum jeweiligen Bewegungsweg des Betätigungsorgans (7) verstellt.

4. Einrichtung nach Anspruch 1, 2 oder 3, **dadurch gekennzeichnet, daß** die Steuerschaltung (6) den jeweiligen Leistungshalbleiter (4, 5) in der Art einer Pulsweitenmodulation, einer Phasenanschnittsteuerung oder einer Phasenabschnittsteuerung ansteuert, und zwar derart daß der Elektromotor (2) mit einer dem Bewegungsweg des Betätigungsorgans (7) zugeordneten Drehzahl oder einem dem Bewegungsweg des Betätigungsorgans (7) zugeordneten Drehmoment betreibbar ist, und daß die Steuerschaltung (6) den Leistungshalbleiter (4, 5) bei Maximalstellung des Betätigungsorgans (7) voll durchschaltet.

5. Einrichtung nach einem der Ansprüche 1 bis 4, **dadurch gekennzeichnet, daß** die Steuerschaltung (6) aus einer Elektronik (12) besteht, und daß es sich bei der Elektronik (12) um einen Mikroprozessor, einen Mikrocontroller oder einen ASIC handelt.

6. Einrichtung nach einem der Ansprüche 1 bis 5, **dadurch gekennzeichnet, daß** die Steuerschaltung (6) bei Rückkehr des Betätigungsorgans (7) in die Ausgangsstellung den jeweiligen Leistungshalbleiter (4, 5) derart ansteuert, daß der Elektromotor (2) zur Erzielung einer generatorischen Bremswirkung kurzgeschlossen ist, und daß der Leistungshalbleiter (4, 5) während des Bremsvorgangs statisch eingeschaltet ist und/oder mittels einer Pulsweitenmodulation angesteuert wird.

7. Einrichtung nach einem der Ansprüche 1 bis 6, **dadurch gekennzeichnet, daß** es sich bei dem Leistungshalbleiter (4, 5) um einen MosFet handelt.

8. Einrichtung nach einem der Ansprüche 1 bis 7, **dadurch gekennzeichnet, daß** dem jeweiligen Zweig (9, 10) eine externe Freilaufdiode (13) für die Beschaltung des Elektromotors (2) zugeordnet ist.

9. Einrichtung nach einem der Ansprüche 1 bis 8, **dadurch gekennzeichnet, daß** der Leistungshalbleiter (4, 5) eine interne Diode (14) aufweist, derart daß die interne Diode (14) als dem jeweiligen Zweig (9, 10) zugeordnete Freilaufdiode für die Beschaltung des Elektromotors (2) dient.

10. Einrichtung nach einem der Ansprüche 1 bis 9, **dadurch gekennzeichnet, daß** das Schaltmodul (8) und/oder die Steuerschaltung (6) einen Hilfskontakt (15) aufweist, derart daß die Steuerschaltung (6) durch den Hilfskontakt (15) bei Bewegung des Betätigungsorgans (7) aus der Ausgangsstellung eingeschaltet wird.

## Claims

1. Device for actuating an electric motor (2), in particular a DC motor in a cordless power tool (18), comprising a power circuit (3) that comprises at least one power semiconductor (4, 5) and is intended for controllably applying an electrical voltage to the electric motor (2), as well as a control circuit (6) for controlling the power semiconductor (4, 5) such that the electric motor (2) can be operated at an adjustable speed or an adjustable torque, and comprising a switching module (8) for switching on and/or off the operation for the electric motor (2), **characterised in that** the power circuit (3) comprises one branch (9, 10), in each case, as a current path comprising a power semiconductor (4, 5) for the clockwise and for the anti-clockwise rotation of the electric motor (2), and **in that** a mechanical, electric switch (11) which can be actuated by a user, via a manually operable slide (23), and is intended for adjusting the relevant branch (9, 10) is arranged for the power circuit (3) and/or in the power circuit (3), wherein detection means (17) for determining the switching position of the electric switch (11) by the control circuit (6) are provided, such that the power semiconductor (4, 5) associated with the particular switching position can be actuated using the control circuit (6).

2. Device according to claim 1, **characterised in that** the electric switch (11) is designed as a changeover contact.

3. Device according to either claim 1 or claim 2, **characterised in that** the switching module (8) comprises a manually operable actuation member (7), **in that** the actuation member (7) can be moved from an initial position as far as a maximum position, and **in that** the movement of the actuation member (7) adjusts a potentiometer (27) in a manner corresponding to the particular movement path of the actuation member (7).

4. Device according to any of claims 1, 2 or 3, **characterised in that** the control circuit (6) actuates the particular power semiconductor (4, 5) in the manner of pulse width modulation, phase angle control, or reverse phase control, specifically such that the electric motor (2) can be operated having a speed associated with the movement path of the actuation member (7) or a torque associated with the movement path of the actuation member (7), and **in that** the control circuit (6) fully interconnects the power semiconductor (4, 5) in the maximum position of the actuation member (7).

5. Device according to any of claims 1 to 4, **characterised in that** the control circuit (6) consists of electronics (12), and **in that** the electronics (12) is a microprocessor, a microcontroller or an ASIC.

6. Device according to any of claims 1 to 5, **characterised in that**, when the actuation member (7) returns to the initial position, the control circuit (6) actuates the particular power semiconductor (4, 5) such that the electric motor (2) is short-circuited in order to achieve a generator braking effect, and **in that** the power semiconductor (4, 5) is statically switched on during the braking process, and/or is actuated by means of pulse width modulation.

7. Device according to any of claims 1 to 6, **characterised in that** the power semiconductor (4, 5) is a MOSFET.

8. Device according to any of claims 1 to 7, **characterised in that** the particular branch (9, 10) is associated with an external flyback diode (13) for connecting the electric motor (2).

9. Device according to any of claims 1 to 8, **characterised in that** the power semiconductor (4, 5) comprises an internal diode (14), such that the internal diode (14) serves as the flyback diode, associated with the particular branch (9, 10), for connecting the electric motor (2).

10. Device according to any of claims 1 to 9, **characterised in that** the switching module (8) and/or the control circuit (6) comprises an auxiliary contact (15), such that the control circuit (6) is activated by the auxiliary contact (15), when the actuation member (7) is moved out of the initial position.

## Revendications

1. Dispositif pour le pilotage d'un moteur électrique (2), en particulier d'un moteur à courant continu dans un outil électrique à batterie (18), avec un circuit de puissance (3) présentant au moins un semi-conducteur de puissance (4, 5), servant à appliquer avec commande possible une tension électrique sur le moteur électrique (2), ainsi qu'un circuit de commande (6) servant à commander le semi-conducteur de puissance (4, 5) de telle manière que le moteur électrique (2) peut fonctionner à une vitesse de rotation réglable ou avec un couple de rotation réglable, et avec un module de commutation (8) servant à activer et/ou à désactiver le fonctionnement pour le moteur électrique (2), **caractérisé en ce que** le circuit de puissance (3) présente respectivement une branche (9, 10) en tant que trajet de courant avec un semi-conducteur de puissance (4, 5) pour la marche à droite et pour la marche à gauche également du moteur électrique (2), et qu'un commutateur (11) électrique mécanique pouvant être actionné par l'utilisateur au moyen d'un coulisseau (23) utilisable manuellement, servant à régler la branche (9, 10) respective est disposé pour le circuit de puissance (3) et/ou dans le circuit de puissance (3), dans lequel des moyens de détection (17) servant à déterminer la position de commutation du commutateur (11) électrique par le circuit de commande (6) sont prévus de telle sorte que le semi-conducteur de puissance (4, 5) associé au circuit de commutation respectif peut être piloté par le circuit de commande (6).

2. Dispositif selon la revendication 1, **caractérisé en ce que** le commutateur (11) électrique est configuré en tant que contact alternatif.

3. Dispositif selon la revendication 1 ou 2, **caractérisé en ce que** le module de commutation (8) présente un organe d'actionnement (7) utilisable manuellement, que l'organe d'actionnement (7) peut être déplacé depuis une position de départ jusqu'à une position maximale, et que le déplacement de l'organe d'actionnement (7) ajuste un potentiomètre (27) de manière à correspondre au chemin de déplacement respectif de l'organe d'actionnement (7).

4. Dispositif selon la revendication 1, 2 ou 3, **caractérisé en ce que** le circuit de commande (6) pilote le semi-conducteur de puissance (4, 5) respectif à la manière d'une modulation de largeur d'impulsion, d'une commande de début de phase ou d'une commande de fin de phase, à savoir de telle manière que le moteur électrique (2) peut fonctionner à une vitesse de rotation associée au chemin de déplacement de l'organe d'actionnement (7) ou avec un couple de rotation associé au chemin de déplacement de l'organe d'actionnement (7), et que le circuit de commande (6) commute en totalité le semi-conducteur de puissance (4, 5) en position maximale de l'organe d'actionnement (7).

5. Dispositif selon l'une quelconque des revendications 1 à 4, **caractérisé en ce que** le circuit de commande (6) est constitué d'une électronique (12), et que l'électronique (12) est un microprocesseur, un microcontrôleur ou un ASIC.

6. Dispositif selon l'une quelconque des revendications 1 à 5, **caractérisé en ce que** le circuit de commande (6) pilote de telle manière le semi-conducteur de puissance (4, 5) respectif lors du retour de l'organe d'actionnement (7) dans la position de départ que le moteur électrique (2) est court-circuité pour obtenir une action de freinage de générateur, et que le semi-conducteur de puissance (4, 5) est activé de manière statique au cours de l'opération de freinage et/ou est piloté au moyen d'une modulation de largeur d'impulsion.

7. Dispositif selon l'une quelconque des revendications 1 à 6, **caractérisé en ce que** le semi-conducteur de puissance (4, 5) est un MOSFET.

8. Dispositif selon l'une quelconque des revendications 1 à 7, **caractérisé en ce qu'**une diode de roue libre (13) externe pour le branchement du moteur électrique (2) est associée à la branche (9, 10) respective.

9. Dispositif selon l'une quelconque des revendications 1 à 8, **caractérisé en ce que** le semi-conducteur de puissance (4, 5) présente une diode interne (14) de telle manière que la diode interne (14) fait office de diode de roue libre associée à la branche (9, 10) respective pour le branchement du moteur électrique (2).

10. Dispositif selon l'une quelconque des revendications 1 à 9, **caractérisé en ce que** le module de commutation (8) et/ou le circuit de commande (6) présentent un contact auxiliaire (15) de telle manière que le circuit de commande (6) est activé par le contact auxiliaire (15) lors du déplacement de l'organe d'actionnement (7) hors de la position de départ.
